# EUROPEAN PATENT SPECIFICATION

(11) **EP 0 873 381 B1**
(45) Date of publication and mention of the grant of the patent: **17.03.2004**
(21) Application number: 96929041.0
(22) Date of filing: 23.08.1996
(51) Int. Cl.: C10G 19/00, C10G 19/02, C09K 3/00

(54) **PROCESS FOR DECREASING THE CORROSIVITY AND ACIDITY OF PETROLEUM CRUDES**
VERFAHREN ZUR VERMINDERUNG DER KORROSIVITÄT UND ACIDITÄT VON ROHÖL
PROCEDE DE REDUCTION DE LA CORROSIVITE ET DE L'ACIDITE DES PETROLES BRUTS

(30) Priority: 25.08.1995 US 519554; 06.02.1996 US 597310; 04.06.1996 US 655261
(43) Date of publication of application: 28.10.1998
(73) Proprietor: ExxonMobil Research and Engineering Company, Annandale, New Jersey 08801 (US)
(72) Inventor: BLUM, Saul, C., Edison, NJ 08820 (US); ANDERSON, Michael, P., Clinton, NJ 08809 (US); RAMANARAYANAN, Trikur, A., Somerset, NJ 08873 (US); SARTORI, Guido, Annandale, NJ 08801 (US); SAVAGE, David, W., Lebanon, NJ 08833 (US); GORBATY, Martin, L., Westfield, NJ 07090 (US); BALLINGER, Bruce, H., Bloomsbury, NJ 08804 (US); MARTELLA, David, J., Princeton, NJ 08540 (US)
(74) Representative: Dew, Melvyn John
(86) International application number: PCT/US1996/013690
(87) International publication number: WO 1997/008271

(56) References cited:
- US-A- 2 068 979
- US-A- 2 770 580
- US-A- 4 033 860
- US-A- 4 199 440
- NATIONAL ASSOCIATION OF CORROSION ENGINEERS, February 1950, Vol. 6, CAMP, E.Q. et al., "Neutralization as a Means of Controlling Corrosion of Refinery Equipment", page 43.
- KALICHEVSKY, V.A. et al., "Petroleum Refining with Chemicals", ELSEVIER PUBLISHING CO., 1956, Chapter 4, pages 141-144, 171-173.

## Description

The present invention relates to the use of naphthenates for decreasing the acidity and corrosivity of crudes and crude fractions containing naphthenic acids.

### BACKGROUND OF THE INVENTION

Many petroleum crudes with high naphthenic acid content are corrosive to the equipment used to extract, transport and process the crude, such as pipestills and transfer lines.

Efforts to minimize naphthenic acid corrosion have included a number of approaches. U.S. Patent 5,182,013 refers to such recognized approaches as blending of higher naphthenic acid content oils with low naphthenic acid content oils. Additionally, a variety of attempts have been made to address the problem by replacing carbon or low alloy steels by more expensive, highly alloyed stainless steels, using corrosion inhibitors for the metal surfaces of equipment exposed to the acids, or by neutralizing and removing the acids from the oil. Some inhibitor companies have claimed that the use of specific sulfur and phosphorus based organic corrosion inhibitors can be effective in reducing corrosion by naphthenic acids. Examples of such technologies include treatment of metal surfaces with corrosion inhibitors such as polysulfides (U.S. Patent 5,182,013) or oil soluble reaction products of an alkynediol and a polyalkene polyamine (U.S. Patent 4,647,366), and treatment of a liquid hydrocarbon with a dilute aqueous alkaline solution, specifically, dilute aqueous NaOH or KOH (U.S. Patent 4,199,440). U.S. Patent 4,199,440 notes, however, that a problem arises with the use of aqueous solutions that contain higher concentrations of aqueous base. These solutions form emulsions with the oil, necessitating use of only dilute aqueous base solutions. U.S. Patent 4,300,995 discloses the treatment of carbonous materials particularly coal and its products such as heavy oils, vacuum gas oil, and petroleum residua, having acidic functionalities, with a quaternary base such as tetramethylammonium hydroxide in a liquid (alcohol or water). Additional processes using aqueous alkali hydroxide solutions include those disclosed in Kalichevsky and Kobe, Petroleum Refining With Chemicals, (1956) Ch. 4, as well as U.S. Patent 3,806,437; 3,847,774; 4,033,860; 4,199,440 and 5,011,579; German Patents 2,001,054 and 2,511,182; Canadian Patent 1,067,096; Japanese Patent 59-179588; Romanian Patent 104,758 and Chinese Patent 1,071,189. Certain treatments have been practiced on mineral oil distillates and hydrocarbon oils (e.g., with lime, molten NaOH or KOH, certain highly porous calcined salts of carboxylic acids suspended on carrier media). Whole crude oils were not treated.

U.S. Patents 2,795,532 and 2,770,580 (Honeycutt) disclose processes in which "heavy mineral oil fractions" and "petroleum vapors", respectively are treated. The '532 patent further discloses that a "flashed vapors" are contacted with "liquid alkaline material" containing, inter alia, alkali metal hydroxides and "liquid oil." A mixture solely of NaOH and KOH in molten form is disclosed as the preferred treating agent, however "other alkaline materials, e.g., lime, can also be employed in minor amounts." US-A-2,770,580 discloses an improved method of contacting alkali metal hydroxides with lubricating oil vapors to remove naphthenic acids therefrom by providing a trayed-section in the distillation tower down which liquid lubricating oil, hydroxide and alkali naphthenate pass, the naphthenate being formed from reaction of the hydroxide with naphthenic acid in oil vapors rising through the trayed-section.

In U.S. 2,068,979, it is disclosed that naphthenates were used to prevent corrosion in a petroleum still. The patent teaches the addition of calcium naphthenate to petroleum to react with and scavenge strong free acids such as hydrochloric and sulfuric acids. This was intended to prevent corrosion in distillation units by those strong acids and makes no claims with respect to naphthenic acids. In fact, naphthenic acids would have been formed when the strong acids were converted to salts. Some prior art involved the addition or formation of calcium carbonate (Cheng et al., U.S. 4,164,472) or magnesium oxide (Cheng et al., US 4,163,728 and 4,179,383, and 4,226,739) dispersions as corrosion inhibitors in fuel products and lubricating oil products, but not in whole or topped crude oil. Similarly, Mustafaev et al. (Azerb. Inst, Neft. Khim. (1971) 64-6) reported on the improved detergency and anticorrosive properties of calcium, barium, and zinc hydroxide additives in lubricating oils. Amine naphthenates (Wasson et al., US 2,401,993) and zinc naphthenates (Johnson et al., US 2,415,353; Rouault, US 2,430,951; and Zisman et al., US 2,434,978) were also claimed as anticorrosive additives in various lubricating oil products. Another use of calcium compounds with petroleum includes removal of naphthenic acids from hydrocarbon oils by limestone-on-glass abstraction (Elkin et al., Soviet Union 1,786,060) or by metal oxides related to hydrotalcites (Gillespie et al., US 5,389,240). Finally, calcium hydroxide (Kessick, Canadian Patent 1,249,760) aids in separation of water from heavy crude oil wastes.

While these processes have achieved varying degrees of success there is a continuing need to develop more efficient methods for reducing the acidity and corrosivity of whole crudes and fractions thereof, particularly residua and other 650⁺°F (343⁺°C) fractions.

The present invention provides the use of a naphthenate selected from Group IA and Group IIA metal naphthenates to decrease the naphthenic acid corrosivity of crude oil(s) and crude oil fraction(s), as specified in claim 1 of the claims following this description.

Optional and preferred features of the invention are specified in the claims which are appended to the said claim 1.

### BRIEF DESCRIPTION OF THE DRAWINGS

Figure 1 shows the corrosion rate of a crude oil as a function of Ca concentration for Example 1.
Figure 2 shows the corrosion rate for the crude oil versus % naphthenic acid neutralization for Example 2.
Figure 3 shows the corrosion rate for a 785-970°F (418-521°C) crude oil fraction versus % naphthenic acid neutralization for Example 3.

### DETAILED DESCRIPTION OF THE INVENTION

Some whole crude oils contain organic acids such as carboxylic acids that contribute to corrosion or fouling of refinery equipment. These organic acids generally fall within the category of naphthenic and other organic acids. Naphthenic acid is a generic term used to identify a mixture of organic acids present in petroleum stocks. Naphthenic acids can cause corrosion at temperatures ranging from about 65°C (150°F) to 420°C (790°F). Naphthenic acids are distributed through a wide range of boiling points (i.e., fractions) in acid containing crudes. The present invention provides a method for decreasing the corrosivity of such acids from the hereafter defined crude oils and liquid fractions in which these acids are often concentrated. The naphthenic acids are present either alone or in combination with other organic acids, such as phenols.

Whole crude oils are very complex mixtures in which a large number of competing reactions may occur. Unexpectedly, the reactions occur although the acid is dilute in comparison to the large excess of crude and other reactive species typically present. And desirably the resulting naphthenate salts remain oil soluble and tend to concentrate in the residua rather than concentrating in lower boiling point side streams.

The process of the present invention has utility in processes in which inhibiting or controlling liquid phase corrosion, e.g., of metal surfaces, is desired. More generally, the present invention may be used in applications in which a reduction in the acidity, typically, as evidenced by a decrease in the neutralization number of the acidic crude or a decrease in intensity of the carboxyl band in the infrared spectrum at about 1708 cm⁻¹ of the treated (neutralized) crude, would be beneficial and in which oil-aqueous emulsion formation and large solvent volumes are not desirable. The present invention also provides a method for controlling emulsion formation in acid crudes, by treating a major contributing component of such emulsions, naphthenic and similar organic acids, and by reducing the attendant handling and processing problems.

The concentration of acid in the crude oil is typically expressed as an acid neutralization number or acid number, which is the number of milligrams of KOH required to neutralize the acidity of one gram of oil. It may be determined according to ASTM D-664. Typically, the decrease in acid content may be determined by a decrease in the neutralization number or in the intensity of the carboxyl band in the infrared spectrum at about 1708 cm⁻¹. Crude oils with total acid numbers (TAN) according to ASTM D-664 of about 1.0 mg KOH/g and lower are considered to be of moderate to low corrosivity (crudes with a total acid number of 0.2 or less generally are considered to be of low corrosivity). Crudes with total acid numbers greater than 1.5 are considered corrosive. Acidic crudes having free carboxyl groups may be effectively treated using the process of the present invention. The IR analysis is particularly useful in cases in which a decrease in neutralization number is not evident upon treatment with the base, as has been found to occur upon treatment with bases weaker than KOH.

The crudes that may be used are any naphthenic acid-containing crude oils that are liquid or liquefiable at the temperatures at which the present invention is carried out. As used herein the term whole crudes means unrefined, undistilled crudes.

Corrosive, acidic crudes, i.e., those containing naphthenic acids alone or in combination with other organic acids such as phenols may be treated according to the present invention.

The acidic crudes are preferably whole crudes. However, acidic fractions of whole crudes such as topped crudes and other high boiling point fractions also may be treated. Thus, for example, 500°F (260°C) fractions, 650⁺°F (343⁺°C) fractions, vacuum gas oils, and most desirably 1050⁺°F (565⁺°C) fractions and topped crudes may be treated.

Preferred metals of the metal naphthenates belong to the alkaline earth metal class, namely, Ca, Mg, Ba and Sr.

The starting acid crude oils for naphthenic acid salt treatment normally have a water content at least 0.3 wt.%, more preferably said water content is between 0.3 wt% and 7 wt%.

For direct addition, the metal naphthenate salt is added in an effective amount of up to 5:1 moles of metal to acidic functionality in the crude oil. Specifically in this aspect of the invention the corrosivity of a naphthenic acid-containing, corrosive crude is decreased by contacting a starting naphthenic acid-containing, corrosive crude oil with an effective amount of a naphthenate salt selected from the group consisting of Group IIA metal naphthenate full and partial salts (such as half salts). Alternatively, the metal naphthenate salt may be added by blending a starting naphthenic acid-containing crude oil with a second, metal naphthenate-containing crude oil or fraction ("treating crude oil"). The metal naphthenate salts may be made in situ by, for example, the Oxide, Hydroxide and Hydroxide Hydrate Treatment disclosed in our copending application 9 69290 39.4. The neutralized crude may be fully or partially neutralized depending on the ratio of metals to acidic functionality used to produce it. The metals are Group IA and Group IIA metals as discussed previously. Treating crudes containing an effective amount of naphthenate salt are used, but practically this means that the ratio of metal naphthenate in the treating crude to acid in the starting, acid containing crude will be less than 1:1 moles. However, in practice, an amount of naphthenate salt is added in a ratio of from 0.025:1 to 1:1 moles of metal based on acid content of the starting acidic crude, more typically 0.25 to 1:1 moles is used. Ratios of greater than 1:1 moles and typically to 10:1 moles metal to acid content may also be used. However, naphthenate salt in excess of that produced by in situ neutralization in the treating crude may need to be added. Thus acidity and corrosivity reduction of the starting crude may be achieved to the desired degree by altering the ratio of starting acid-containing crude to naphthenate salt generated by in situ addition, or by direct addition and/or blending with the second, naphthenate-containing (i.e., neutralized) crude. The starting acidic crude and the second, naphthenate-containing crude should have comparable boiling point ranges and characteristics. Thus. for example, an acidic whole crude should be blended with a naphthenate containing whole crude, a 500°⁺F (260°⁺C) fraction with a corresponding fraction, a 650°⁺F (343°⁺C) fraction with a corresponding fraction, a 1050°⁺F (565°⁺C) fraction with a corresponding fraction, a vacuum gas oil with a corresponding vacuum gas oil, a topped crude with a comparable topped crude and the like.

Broadly stated when in situ generation is practiced, the process involves adding a metal oxide or hydroxide to a starting acid-containing crude oil in substoichiometric amounts to form the corresponding naphthenate. Thus in another aspect, an alkaline-earth metal oxide, in particular, CaO or calcium hydroxide, is added in substoichiometric amounts to the crude oil which contains carboxylic acids, in particular, naphthenic acid. By this, is meant that less CaO or calcium hydroxide is added than needed to fully neutralize the acids.

While not wishing to be bound by a particular theory, it is believed that substoichiometric Ca addition may suppress corrosion two ways (1) initial neutralization of some naphthenic acids, and (2) suppression of H⁺ in remaining acids by the common ion effect. Ca reacts preferentially with stronger naphthenic acids.

The hypothesis for Ca effect on corrosion is given below.

The hydrogen ion (H⁺) is believed as one driver for the corrosion reaction: ${\text{Fe}}^{\text{o}} {\text{+ 2H}}^{\text{+}} {\text{→ Fe}}^{\text{++}} {\text{+ H}}_{\text{2}}$

The CaO reaction with naphthenic acid requires and also produces H₂O according to ${\text{CaO + 2RCOO-H → (RCOO)}}_{\text{2}} {\text{-Ca + H}}_{\text{2}} \text{O.}$

Then with some H₂O present, weakly ionized naphthenic acids are a H⁺ source according to ${\text{RCOO-H → H}}^{\text{+}} {\text{+ RCOO}}^{\text{-}}$

The Ca naphthenates form additional naphthenate ions (next equation) to shift the acid equilibrium to the left, diminishing the H⁺ concentration by the common ion effect. ${\text{(RCOO)}}_{\text{2}} {\text{-Ca → (RCOO)-Ca}}^{\text{+}} {\text{+ RCOO}}^{\text{-}} {\text{→ Ca}}^{\text{++}} {\text{+ 2RCOO}}^{\text{-}}$

This results in a disproportionate H⁺ concentration decrease if the salt dissociation is greater than acid dissociation.

Beneficially, emulsion formation can be reduced or essentially absent in the foregoing treatments.

The present invention is illustrated by the following non-limiting examples:

### Example 1

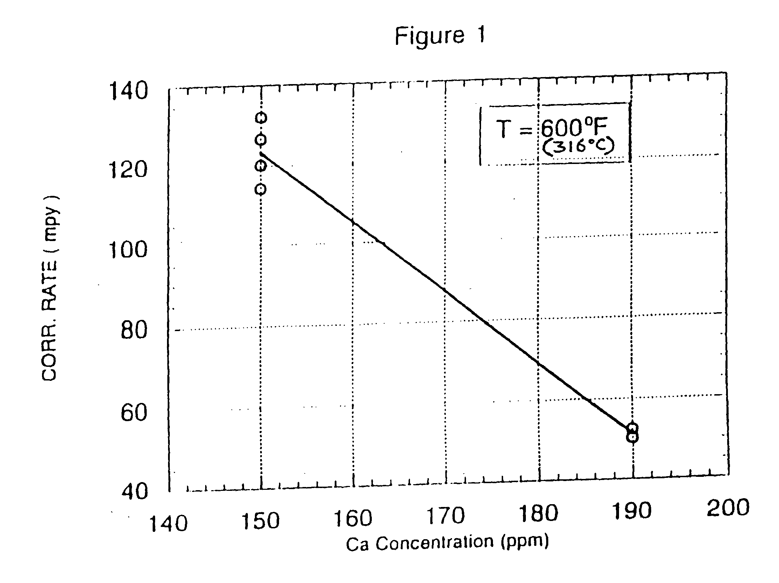

250 gms. of crude oil having a high naphthenic acid (total acid number = 8 mg KOH per gm of oil) content were placed in a corrosion testing autoclave. The corrosion rate of carbon steel in the crude oil was measured at a temperature of 600°F (316°C) and gave a value of ∼ 125 mils per year (mpy). The crude contained a calcium concentration of ∼ 150 ppm. Then, to a fresh batch of 250 gms. of the same crude oil, calcium naphthenate was added so that the calcium content in the mixture changed to a value of 190 ppm. The corrosion rate of carbon steel was remeasured in this mixture. As shown in Figure 1, the corrosion rate was found to be a factor of 2.5 lower. The disproportionate decrease in corrosion rate is attributed to corrosion inhibition by the Ca naphthenates.

### Example 2

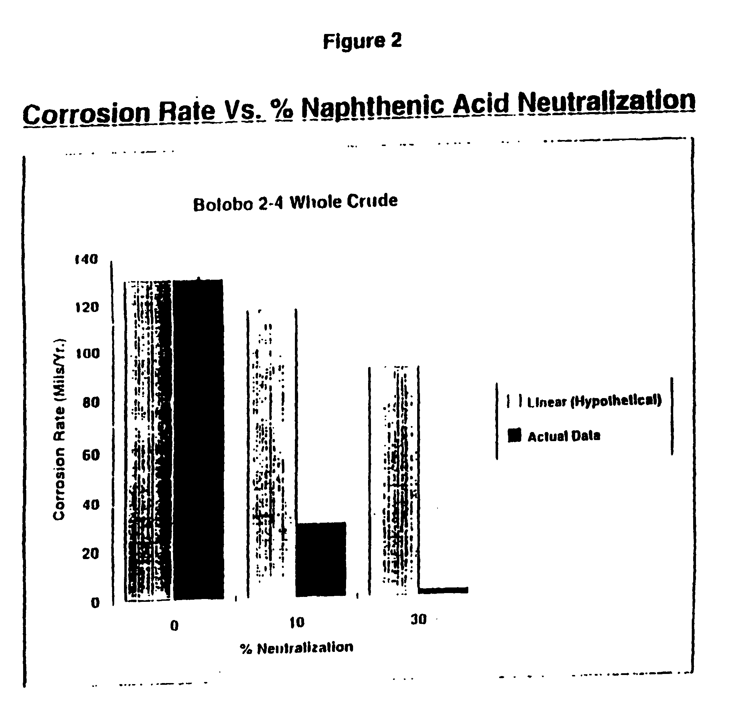

The naphthenic acid content of a Bolobo 2/4 crude (a high TAN, 8.2 KOH/g crude) was fully neutralized by treatment with a stoichiometric amount of CaO at a temperature of 210°F (98.9°C). Virgin Bolobo 2/4 crude was then mixed with the fully neutralized crude in weight ratios of 9:1 and 7:3, respectively. The corrosion rate of carbon steel in the two blends was measured at a temperature of 600°F (316°C). The results are shown as the black bars in Figure 2. The corrosivity of the 9:1 blend (10% neutralized) is a factor of 6 lower when compared to the virgin crude and that of the 7:3 blend (30% neutralized) is a factor of 50 lower. Had only neutralization occurred without synergistic corrosion inhibition, a linear decrease in corrosion rate, proportional to the degree of neutralization, would have resulted as illustrated by the shaded bars in Figure 2. The larger decrease in measured corrosion rates is further evidence of corrosion inhibition by metal naphthenate formed during neutralization.

### Example 3

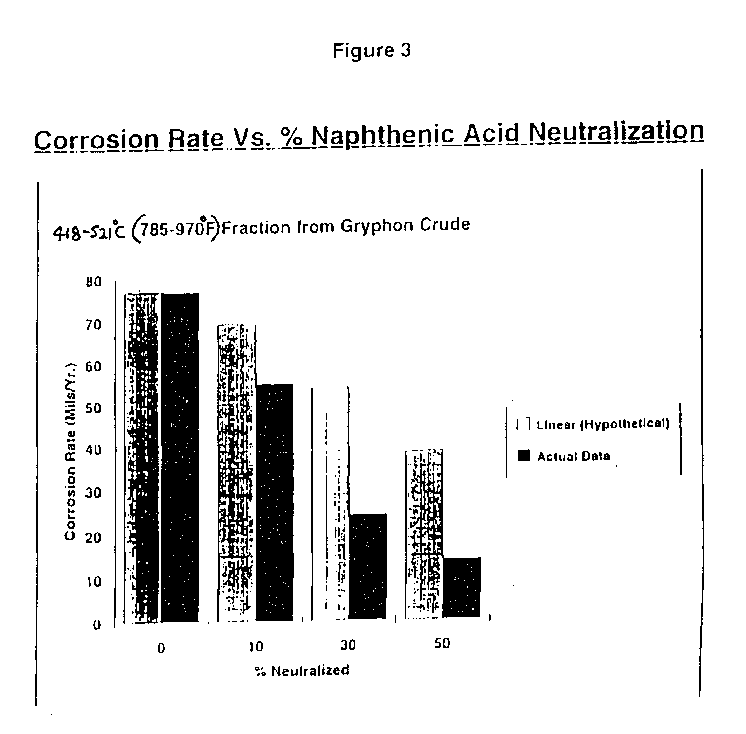

This is similar in concept to Example 2 except that a 785-970°F (418-521° C) distillate fraction obtained from Gryphon crude (TAN 4 mg kOH/g) was used as the starting material. Again, corrosion tests were performed at 600°F (316°C) incorporating with the starting material separate fractions neutralized at 10, 30, and 50% with CaO. Here, up to an 80% reduction in corrosion rate at 50% neutralization was measured (black bars in Figure 3), with each measurement exceeding the hypothetical (shaded bars) results if corrosion reduction were proportional to the degree of neutralization.

## Claims

1. The use of a naphthenate selected from Group IA and Group IIA metal naphthenates to decrease the naphthenic acid corrosivity of crude oil(s) and crude oil fraction(s), which corrosivity arises from naphthenic and organic acids having carboxyl groups and which crude oil(s) and crude oil fraction(s) optionally contain an effective amount of water.

2. Use as in claim 1 wherein the metal naphthenate is mixed into the said crude oil(s) or crude oil fraction(s).

3. Use as in claim 1 or claim 2 wherein the amount of said naphthenate is in a range of up to 5 mols per mol of acid functionality of the said crude oil(s) or fraction(s).

4. Use as in any one of claims 1 to 3 wherein the said crude oil or crude oil fraction contains up to 7 wt% water.

5. Use as in any one of claims 1 to 4 comprising blending said naphthenate with a starting crude oil or crude oil fraction which has naphthenic acid corrosivity arising from naphthenic acids and organic acids having carboxylic groups, and blending the resulting naphthenate and oil blend with another crude oil or crude oil fraction having naphthenic acid corrosivity arising from naphthenic acids and organic acids having carboxyl groups to produce a final treated oil of decreased naphthenic acid corrosivity.

6. Use as in claim 5 wherein the said starting oil or starting fraction and the said other oil or fraction have comparable boiling ranges.

7. Use as in any one of claims 1 to 6 wherein the said naphthenate is employed in an amount in a molar range of from 0.025:1 to 1:1 mols metal based on the carboxylic acid content of the crude oil(s) or crude oil fraction(s).

8. Use as in any one of claims 1 to 7 wherein the crude oil(s) or oil fraction(s) has or have a neutralization number in a range of from 0.2 to 10 mg KOH/g.

9. Use as in any one of claims 1 to 8 wherein the said metal naphthenate is a full or half salt and selected from calcium naphthenate and magnesium naphthenate.

10. Use as in any one of claims 1 to 9 wherein the crude oil(s) and crude oil fraction(s) have boiling points in a range of 343 C+ (650 F+), e.g., 565 C+ (1050 F+).

## Patentansprüche

1. Verwendung von Naphthenat ausgewählt aus Gruppe IA- und Gruppe IIA-Metallnaphthenaten zur Verminderung der Naphthensäurekorrosivität von Rohöl (en) und Rohölfraktion(en), wobei die Korrosivität auf Naphthen- und organische Säuren mit Carbonsäuregruppen zurückzuführen ist und das Rohöl (die Rohöle) und die Rohölfraktion(en) gegebenenfalls eine wirksame Menge Wasser enthält (enthalten).

2. Verwendung nach Anspruch 1, bei der das Metallnaphthenat in das Rohöl (die Rohöle) oder die Rohölfraktion(en) eingemischt wird.

3. Verwendung nach Anspruch 1 oder Anspruch 2, bei der die Menge des Naphthenats im Bereich von bis zu 5 mol pro mol Säurefunktionalität des Rohöls (der Rohöle) oder der Fraktion(en) liegt.

4. Verwendung nach einem der Ansprüche 1 bis 3, bei der das Rohöl oder die Rohölfraktion bis zu 7 Gew.-% Wasser enthält.

5. Verwendung nach einem der Ansprüche 1 bis 4, bei der das Naphthenat mit Ausgangsrohöl oder Ausgangsrohölfraktion gemischt wird, das oder die eine Naphthensäurekorrosivität aufweist, die auf Naphthensäuren und organische Säuren mit Carbonsäuregruppen zurückzuführen ist, und das erhaltene Gemisch von Naphthenat und Öl mit anderem Rohöl oder anderer Rohölfraktion mit Naphthensäurekorrosivität, die auf Naphthensäuren und organischen Säuren mit Carbonsäuregruppen zurückzuführen ist, gemischt wird, um ein behandeltes Endöl mit verminderter Naphthensäurekorrosivität herzustellen.

6. Verwendung nach Anspruch 5, bei der das Ausgangsöl oder die Ausgangsfraktion und das andere Öl oder die andere Fraktion vergleichbare Siedebereiche besitzen.

7. Verwendung nach einem der Ansprüche 1 bis 6, bei der das Naphthenat in einer Menge im molaren Bereich von 0,025 : 1 bis 1 : 1 mol Metall, bezogen auf den Carbonsäuregehalt des Rohöls (der Rohöle) oder der Rohölfraktion(en) eingesetzt wird.

8. Verwendung nach einem der Ansprüche 1 bis 7, bei der das Rohöl (die Rohöle) oder die Ölfraktion(en) eine Neutralisationszahl im Bereich von 0,2 bis 10 mg KOH/g hat (haben).

9. Verwendung nach einem der Ansprüche 1 bis 8, bei der das Metallnaphthenat ein Voll- oder Halbsalz ist und ausgewählt ist aus Calciumnaphthenat und Magnesiumnaphthenat.

10. Verwendung nach einem der Ansprüche 1 bis 9, bei der das Rohöl (die Rohöle) und die Rohölfraktion(en) Siedepunkte im Bereich von 343 °C+ (650 °F+), z.B. 565 °C+ (1050 °F+) hat (haben).

## Revendications

1. Utilisation d'un naphténate choisi parmi les naphténates de métaux du groupe IA et du groupe IIA pour réduire la corrosivité des acides naphténiques d'huile(s) brute(s) et de fraction(s) d'huile(s) brute(s), ladite corrosivité étant due aux acides naphténiques et organiques ayant des groupes carboxyle, ladite ou lesdites huile(s) brute(s) et ladite ou lesdites fractions d'huile(s) brute(s) contenant facultativement une quantité efficace d'eau.

2. Utilisation selon la revendication 1, dans laquelle le naphténate de métal est mélangé dans ladite ou lesdites huile(s) brute(s) ou ladite ou lesdites fraction(s) d'huile(s) brute(s).

3. Utilisation selon la revendication 1 ou 2, dans laquelle la quantité dudit naphténate se situe dans une plage allant jusqu'à 5 moles par mole de fonctionnalité acide de ladite ou desdites huile(s) brute(s) ou de ladite ou desdites fraction(s) d'huile(s) brute(s).

4. Utilisation selon l'une quelconque des revendications 1 à 3, dans laquelle ladite huile brute ou ladite fraction d'huile brute contient jusqu'à 7% en poids d'eau.

5. Utilisation selon l'une quelconque des revendications 1 à 4, comprenant le mélange dudit naphténate avec une huile brute ou une fraction d'huile brute de départ qui a une corrosivité d'acides naphténiques due aux acides naphténiques et aux acides organiques ayant des groupes carboxyle, et le mélange du mélange obtenu de naphténate et d'huile avec une autre huile brute ou une autre fraction d'huile brute ayant une corrosivité d'acides naphténiques due aux acides naphténiques et aux acides organiques ayant des groupes carboxyle pour produire une huile traitée finale ayant une moindre corrosivité d'acides naphténiques.

6. Utilisation selon la revendication 5, dans laquelle ladite huile de départ ou ladite fraction de départ et ladite autre huile ou ladite autre fraction ont des plages d'ébullition comparables.

7. Utilisation selon l'une quelconque des revendications 1 à 6, dans laquelle ledit naphténate est utilisé en quantité dans une plage molaire de 0,025:1 à 1:1 moles de métal par rapport à la teneur en acides carboxyliques de la ou des huile(s) brute(s) et de la ou des fraction(s) d'huile(s) brute(s).

8. Utilisation selon l'une quelconque des revendications 1 à 7, dans laquelle la ou les huile(s) brute(s) et la ou les fraction(s) d'huile(s) brute(s) a ou ont un indice de neutralisation dans une plage de 0,2 à 10 mg de KOH/g.

9. Utilisation selon l'une quelconque des revendications 1 à 8, dans laquelle ledit naphténate de métal est un sel complet ou un hémi-sel et est choisi parmi le naphténate de calcium et le naphténate de magnésium.

10. Utilisation selon l'une quelconque des revendications 1 à 9, dans lequel la ou les huile(s) brute(s) et la ou les fraction(s) d'huile(s) brute(s) a ou ont des points d' ébullition dans la plage de 343°C+ (650°F+), par exemple 565°C+ (1050°F+).
